# EUROPEAN PATENT SPECIFICATION

(11) **EP 2 032 872 B1**
(45) Date of publication and mention of the grant of the patent: **20.03.2019**
(21) Application number: 07730729.6
(22) Date of filing: 02.05.2007
(51) Int. Cl.: F16F 15/02, F16F 7/00, F16C 13/00, F16F 7/10, F16F 7/01, D21F 7/02, B65H 18/00, D21F 7/00, D21G 1/00

(54) **ARRANGEMENT FOR DAMPING OSCILLATIONS IN AN OSCILLATING MASS IN A PAPER/BOARD MACHINE ENVIRONMENT**
ANORDNUNG ZUM DÄMPFEN VON SCHWINGUNGEN IN EINER SCHWINGUNGSMASSE IN EINER PAPIER-/KARTONMASCHINENUMGEBUNG
DISPOSITIF DESTINE À AMORTIR LES OSCILLATIONS D'UNE MASSE OSCILLANTE DANS UN ENVIRONNEMENT DE MACHINES A PAPIER OU A CARTON

(30) Priority: 28.06.2006 FI 20065448
(43) Date of publication of application: 11.03.2009
(73) Proprietor: Valmet Technologies, Inc., 02150 Espoo (FI)
(72) Inventor: PURANEN, Arto, 40100 Jyväskylä (FI); TURUNEN, Antti, 40420 Jvskä (FI)
(74) Representative: TBK
(86) International application number: PCT/FI2007/050242
(87) International publication number: WO 2008/000896

(56) References cited:
- WO-A1-98/49394
- JP-A- 2004 239 355
- SU-A1- 1 467 282
- US-A- 2 302 670
- US-A- 2 916 307
- US-A1- 2001 022 256
- US-A1- 2005 132 945
- US-B1- 6 827 551

## Description

The invention relates to damping vibrations generated in parts of paper/board machines, finishing machines, winders and other devices belonging to the paper machine environment, and of their actuators.

In the paper and board machine environment, different types of vibration excitations occur continuously. When the frequency of periodic excitation force nears any of the specific frequencies of the machine or structure, the rigidity of the structure against constraint action is lost, and in such a case damping alone will limit the increase in vibration amplitude. When the excitation frequency is equal to the specific frequency, it is referred to as resonance and resonance vibration. The mode in which the machine vibrates at its specific frequency is called the normal mode. With current paper production speeds, there is always some kind of resonance vibration in the paper machine environment.

Typically, normal-mode specific damping of machines and steel structures is insignificant. This means that the response of structures during resonance becomes high. From this follows premature breakdown of mechanical parts and often also production losses due to both increased maintenance work as well as quality problems in production.

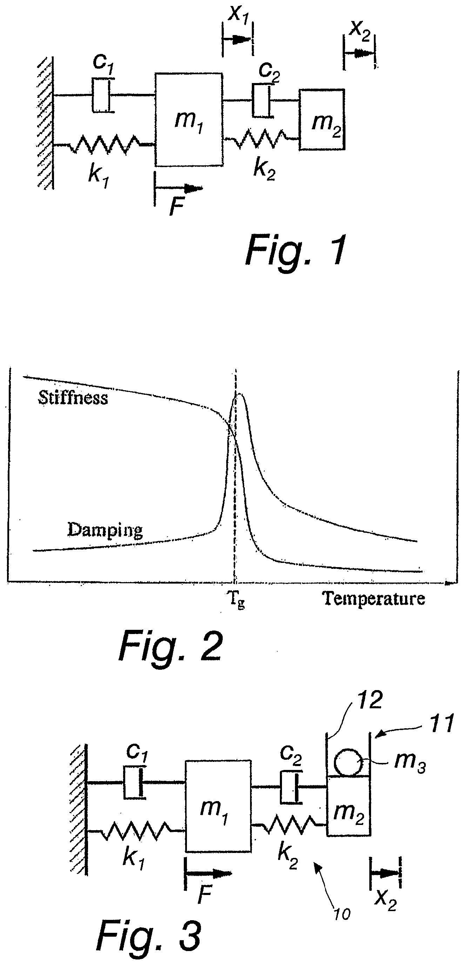

For damping resonance vibrations is normally used a dynamic mass damper. Figure 1 shows diagrammatically a basic implementation of a dynamic mass damper, where a sprung auxiliary mass is incorporated in the vibrating structure, the said auxiliary mass being tuned to the specific frequency being dampened. Thus, the auxiliary system vibrating in resonance provides the primary system with a force counteracting the vibration. The incorporation of the auxiliary mass makes the system a vibrator of two degrees of freedom having two specific frequencies. These frequencies are located close to the original frequency, on either side of it. The distance of the frequencies from one another depends solely on the mass ratio between the auxiliary mass and the mass being dampened, which is typically within the range from about 10% to about 20%. In Figure 1, m₁ is a mass, the vibrations of which are attempted to be dampened by means of auxiliary mass m₂. k₁ and k₂ depict springs or resilient structures, c₁ and c₂ illustrate damping, for example, damping caused by the loss of a polymer or other material or by a viscous fluid. Spring k₁ depicts the spring constant of mass suspension in general, that is, as spring k₁ acts, for example, the elasticity of the paper machine's rolls, bearings, body and roll coatings. Mass m₁ is, for example, a vibrating roll. Damper c₁ includes the internal losses of the said resilient parts. In the mathematical sense, all losses that reduce the quality factor Q of the resonating vibrator act as dampers. In other words, spring k₁ and damper c₁ are always a part of the system and, therefore, usually all the parts of a paper machine have a specific frequency and are susceptible to vibration. The angular frequency of the specific frequency of the undampened mass m₁ is Ω=√(k₁/m₁).

The problem with a mass damper is that mass m₂ cannot be many orders smaller than mass m₁. If mass m₂ is small compared with mass m₁, the quality factor of the vibrator comprised of mass m₂, c₂ and k₂ must be high, in which case the damper is of a very narrow band and the amplitude of the damper's vibration is high, and the vibration reaches a steady state slowly after the changes. Since the masses normally vibrating in the paper manufacture environment are big and the specific frequency of the excitation and also of the system varies with the running speed and, for example, with the roll load or roll temperature, and the excitation is often wideband excitation, a dynamic mass damper is often a poorly functioning solution even if it is tuned by computer control, as disclosed in the applicant's earlier patents FI 101320 and FI 104208.

The problem with a mass damper is that it only dampens efficiently a narrow frequency range and may even momentarily increase vibration when the speed of rotation is changed. To function efficiently, a dynamic mass damper requires a relatively high mass ratio (m₂/m₁) between the auxiliary mass and the dampened mass, which means that the auxiliary mass m₂ is inconveniently large. When the excitation frequency varies, the best damper is one with high internal damping (e.g. the press section has numerous excitation frequencies). On the other hand, high internal damping requires a large auxiliary mass to provide sufficient damping efficiency even at resonance frequency.

In large structures, using a mass damper is problematic for the following reasons. The damping efficiency of a mass damper depends only on the mass ratio, which is usually low in large structures. When the mass ratio is low, also the optimal damping is low. In such a case, the tuning of the auxiliary mass to the correct frequency must be accurate since even the slightest deviation causes considerable deterioration in the capacity of the auxiliary mass. In addition, the auxiliary mass reaches the steady state the more slowly the lower the damping coefficient is, even if the damper is actively tuned to one specific frequency to be dampened. Changes of state may thus be difficult to control.

In improved versions of the dynamic mass damper, the aim has been to increase internal damping. The damper can thus be made to operate over a wider frequency range. The internal damping of a damper is usually increased by means of viscoelastic materials. Electric and hydraulic dampers have also been used, for example, piezoelectric, magnetic and liquid dampers. Increasing damping widens the useful frequency range of the damper, but at the same time reduces the most efficient damping. Normally, the damping by a dynamic damper is increased by means of polymers. With polymers, the most efficient damping is usually achieved within a very narrow temperature range, where the rigidity of the material is markedly reduced. This is a problem in applications of the paper industry, where the temperature may vary over a very wide range, which means that the damper will not operate efficiently in all conditions, nor is its behaviour linear, which causes problems in different applications. Figure 2 shows the temperature dependence of the damping by a dynamic mass damper dampened internally with viscoelastic polymer. Tg refers to the glass transition temperature of the polymer.

US 2001/022256 A1 discloses a vibration damper to be used in a vehicle for handling problems caused due to road unevenness.

US 2 916 307 A discloses a vibration damper for a fluid pressure seal for handling shaking forces.

The object of the present invention is to provide an improved arrangement for damping vibrations in a paper/board machine environment.

This object is solved by an arrangement for damping vibrations having the features of claim 1.

Further developments are stated in the dependent claims.

The invention is described in greater detail below, with reference to the accompanying drawings, in which:
- Figure 1: shows a diagrammatic view in principle of a prior art dynamic mass damper,
- Figure 2: shows the stiffness and damping of the polymer material as a function of temperature, and
- Figure 3: shows a damper arrangement according to the invention as a diagrammatic view in principle.

According to the invention, an impact damper is used in connection with parts of paper/board machines, finishing machines, winders and other devices belonging to the paper machine environment, and of their actuators, in addition to, or instead of, a dynamic mass damper. Figure 3 shows a damping arrangement according to the invention comprising a dynamic mass damper 10 and an impact damper 11. The impact damper is comprised of, for example, a loose, rigid impact mass m₃ and a casing part 12 in which it is placed. The impact mass may consist of one or more solid mass particles. The inside dimensions of the casing 12 are selected so as to leave play around the impact mass m₃, whereupon the mass will be able to collide with the walls of the casing. The impact mass m₃ may also be greater than the auxiliary mass m₂, which means that the auxiliary mass in fact moves at a greater speed than the impact mass. The casing part 12 of the impact damper may be made as a separate structure, which is then incorporated as a part of the mass damper 10, or it may be an integral part of the mass damper structure. The impact damper may also be constructed as shown in Figure 3, where the impact damper 11 is attached to the auxiliary mass m₂ of the dynamic damper 10 or the impact damper may be attached directly to the vibrating part m₁, in which case the dynamic mass damper 10 may be left out completely.

It is also conceivable to realise the impact damper in many other ways than by using an encased mass. The impact mass may be, for example, a slide moving on a bar which collides with another mass on the bar, or the impact mass may consist of pipes placed within each other that bend in various ways, whereupon the pipes act as a spring, mass and impact mass at the same time. Other implementations of impact mass known as such are a chain hanging or sliding on a horizontal surface, a metallic grain box and a metallic grain bag. The impact mass may also be a box containing metallic grains, which increases the frictional losses of the collision. The device operates in accordance with the invention, provided that collisions are produced by means of vibration energy, where vibration energy is transferred into a speed change of the impact mass and a part of the energy converts into heat due to the effect of friction.

The operation of the impact damper is based on collisions of a freely moving mass and the changes in the linear momentum resulting from it. In the collision itself, energy is consumed mainly due to the effect of friction. As a result of the change in the linear momentum due to the collision, the impact mass changes its direction of movement. On the other hand, the linear momentum of the primary mass decreases by the amount of linear momentum delivered to the impact mass, whereby its movement slows down. The aimed damping is brought about by the slowing down of the movement of the primary mass, whereupon also its amplitude decreases. In this connection, the freely moving mass may also be sprung or suspended in a damping manner. What is essential is that the mass will be able to collide and the linear momentum will move between the impact mass and primary mass.

In a steady state, the linear momentum transferring to the impact mass is at its highest when a collision takes place twice within an vibrating period, which means that collisions take place in different directions within each period. The frequency of the impact mass collisions can be adjusted by altering the play around the mass. It may also be possible to adjust the suspension of the impact mass, the size of the mass or the elasticity of the collision. Usually, it is easiest to adjust the play. When magnetic material is used as the impact mass, adjustment can be done by using electromagnets, by means of which the frequency of collisions of the impact mass with the walls of the casing part can be relatively easily adjusted. The play of the impact mass is usually adjusted in such a way that the mass will collide twice during an vibrating period. This adjustment is relatively easy to carry out even actively through computer control, because measuring the frequency of collisions and vibration is easy and the colliding mass reaches the steady state much faster than the low-mass dynamic damper. The adjustment of the collision play of the impact damper is not as crucial as the adjustment of the spring constant or mass of an actively controlled dynamic mass damper. The problem with the dynamic mass damper is that it always has a resonance frequency close to the frequency being dampened, and thus when the running parameters are changed, the resonance frequency will have to be by-passed. An impact damper does not have as clear a resonance frequency.

When the dynamic mass damper is lightweight with respect to the structure being dampened, and its internal damping is low, its amplitude will increase to a high level. In this situation, the impact damper, which is an accessory, will operate efficiently and sensitively. The impact damper incorporated in the mass damper enhances damping by the damper and at the same time reduces the auxiliary mass required.

By means of the invention are achieved, among others, the following advantages:
- the damping by the damper can be adjusted simply by altering the play between the casing of the impact damper and the impact mass. This has been verified through practical tests. The adjustment may also be based on the use of magnetic material and electromagnets or permanent magnets.
- The damping and operation of the damper are not temperature-dependent.
- The operating frequency range of the damper is wide (verified through measurements) and the tuning of the damper to the operating frequency does not have to be as precise as with a dynamic damper.
- The earlier problematic specific frequency can be completely eliminated with a small mass ratio, preferably within the range from about 1% to 5%, and, in addition, both peak amplitudes of a twin-peak frequency response can be dampened to about 50% to 70% less than the original response in resonance. Furthermore, the amplitude of the damper remains low although the mass ratio is low.
- The normal-mode specific damping of the primary structure increases to manifold (verified through measurements).
- Simple and economical to implement.
- Durable; the damper springs are under less strain and damping c₂ is not necessary or its operation is less crucial.
- Despite the collisions of the impact mass, there are no significant noise problems. The type of the noise problem may also be influenced through the sturdiness of the impact casing and the impact mass and the choice of material for the collision surfaces of the casing. A sturdy, hard casing and a hard, elastic collision produce a high-frequency sound, which can, on the other hand, be dampened locally by encasing the damper. A soft collision, on the other hand, produces very little low-frequency noise so long as the casing does not resonate at the frequency produced in the collision. Also in other respects, a typical noise problem with an impact damper is not significant in a paper machine environment and dampening the noise to below the background noise is easy to achieve.
- Compared with an actively adjustable dynamic mass vibrator, the impact damper is much better suited to applications where the excitation is possibly a wide-band one or the frequency of the excitation varies. According to tests, an impact damper combined with a dynamic mass damper is more wide-band than a separate dynamic mass damper of the same weight and thus it is much easier to tune. An impact damper is easy to build into more compact form. In addition, a strongly vibrating narrow-band dynamic mass damper wears relatively quickly, because the spring is under intense strain. When the running parameters change, the frequency of a strongly vibrating mass may momentarily be tuned offset and even cause enhancement of vibration. The impact damper also functions well when the frequency of the excitation changes suddenly.

By means of the arrangement according to the invention is achieved a wider damping band and good maximum damping at the same time. Compared with a damper provided with internal damping with an equally wide band, the maximum damping is much greater. Compared with a narrow-band, undampened dynamic mass damper, the difference in maximum damping is not very significant, but outside the precise specific frequency, the difference is considerable in favour of the damper of the invention. The arrangement according to the invention is particularly well suited for damping vibrations on a nip roll, but other vibrating structures in the paper or board machine environment, such as frame structures, winders and actuators are suitable applications. Because of its small size, the impact damper is located inside the roll.

## Claims

1. An arrangement for damping vibrations in a vibrating mass in a paper/board machine environment, wherein the damping arrangement comprises an impact damper (11) incorporated in the vibrating mass (m1), the impact damper (11) being located inside a roll of a paper/board machine for damping vibrations on the roll.

2. An arrangement for damping vibrations as claimed in claim 1, **characterised in that** the arrangement comprises a dynamic mass damper (10), where an auxiliary mass (m2) is incorporated in the vibrating mass (m1) by a spring means (k2), and that the impact damper (11) is arranged in conjunction with the said dynamic mass damper.

3. An arrangement for damping vibrations as claimed in claim 1 **characterised in that** the impact damper (11) is made an integral part of the dynamic mass damper (10).

4. An arrangement for damping vibrations as claimed in claim 2, **characterised in that** the impact damper (11) is connected to the dynamic mass damper (10) as a separate part.

5. An arrangement for damping vibrations as claimed in any of the claims 1 to 4, **characterised in that** the impact damper (11) is comprised of a casing part (12) in which is placed a loose, rigid impact mass (nrb), the impact mass consisting of one or more solid mass particles, thus leaving play between the impact mass (m3) and the casing part (12), which allows the impact mass (1TI3) to collide with the walls of the casing part.

6. An arrangement for damping vibrations as claimed in any of the claims 1 to 5, **characterised in that** the impact damper (11) is provided with adjustment means for adjusting its damping efficiency.

7. An arrangement for damping vibrations as claimed in claims 5 and 6, **characterised in that** the damping efficiency adjustment means comprise means for adjusting the play between the impact mass and casing part (12).

8. An arrangement for damping vibrations as claimed in claims 5 and 6, **characterised in that** the impact mass (m3) is magnetic material, and that the damping efficiency adjustment means comprise electromagnets or permanent magnets for influencing the frequency of the collisions between the impact mass and the walls of the casing part (12).

9. An arrangement for damping vibrations as claimed in any of the above claims, **characterised in that** the impact damper comprises means for locking the impact mass in place with respect to the casing part, if necessary.

10. An arrangement for damping vibrations as claimed in any of the above claims, **characterised in that** the mass ratio between the damper and the vibrating mass to be dampened is within the range from about 1% to about 5%.

11. An arrangement for damping vibrations as claimed in any of the above claims, **characterised in that** the roll is a nip roll.

## Patentansprüche

1. Anordnung zum Dämpfen von Schwingungen einer schwingenden Masse in einer Umgebung einer Papiermaschine/Kartonmaschine, wobei die dämpfende Anordnung einen Stoßdämpfer (11) aufweist, der in der schwingenden Masse (m1) eingebaut ist, , wobei der Stoßdämpfer (11) im Inneren einer Walze einer Papiermaschine/Kartonmaschine zum Dämpfen der Schwingungen an der Walze angeordnet ist.

2. Anordnung zum Dämpfen von Schwingungen gemäß Anspruch 1, **dadurch gekennzeichnet, dass** die Anordnung einen dynamischen Massedämpfer (10) aufweist, bei dem eine Hilfsmasse (m2) in der schwingenden Masse (m1) durch eine Federeinrichtung (k2) eingebaut ist, und dass der Stoßdämpfer (11) in Verbindung mit dem dynamischen Massedämpfer angeordnet ist.

3. Anordnung zum Dämpfen von Schwingungen gemäß Anspruch 1, **dadurch gekennzeichnet, dass** der Stoßdämpfer (11) als ein einstückiges Teil des dynamischen Massedämpfers (10) gefertigt ist.

4. Anordnung zum Dämpfen von Schwingungen gemäß Anspruch 2, **dadurch gekennzeichnet, dass** der Stoßdämpfer (11) mit dem dynamischen Massedämpfer (10) als ein separates Teil verbunden ist.

5. Anordnung zum Dämpfen von Schwingungen gemäß einem der Ansprüche 1 bis 4, **dadurch gekennzeichnet, dass** der Stoßdämpfer (11) aus einem Gehäuseteil (12) besteht, in dem eine lose, steife Stoßmasse (m3) angeordnet ist, wobei die Stoßmasse aus einem oder mehreren festen Massepartikeln besteht, womit ein Spiel zwischen der Stoßmasse (m3) und dem Gehäuseteil (12) belassen bleibt, das ermöglicht, dass die Stoßmasse (m3) mit den Wänden des Gehäuseteils kollidiert.

6. Anordnung zum Dämpfen von Schwingungen gemäß einem der Ansprüche 1 bis 5, **dadurch gekennzeichnet, dass** der Stoßdämpfer (11) mit einer Einstelleinrichtung zum Einstellen seiner Dämpfeffizienz versehen ist.

7. Anordnung zum Dämpfen von Schwingungen gemäß Anspruch 5 oder 6, **dadurch gekennzeichnet, dass** die Dämpfungseffizienzeinstelleinrichtung eine Einrichtung zum Einstellen des Spiels zwischen der Stoßmasse und dem Gehäuseteil (12) aufweist.

8. Anordnung zum Dämpfen von Schwingungen gemäß Anspruch 5 oder 6, **dadurch gekennzeichnet, dass** die Stoßmasse (m3) ein magnetisches Material ist, und dass die Dämpfungseffizienzeinstelleinrichtung Elektromagneten oder Dauermagneten zum Beeinflussen der Frequenz der Kollisionen zwischen der Stoßmasse und den Wänden des Gehäuseteils (12) aufweist.

9. Anordnung zum Dämpfen von Schwingungen gemäß einem der vorherigen Ansprüche, **dadurch gekennzeichnet, dass** der Stoßdämpfer eine Einrichtung zum Arretieren der Stoßmasse an einem Ort in Bezug auf den Gehäuseteil bei Bedarf aufweist.

10. Anordnung zum Dämpfen von Schwingungen gemäß einem der vorherigen Ansprüche, **dadurch gekennzeichnet, dass** das Massenverhältnis zwischen dem Dämpfer und der schwingenden zu dämpfenden Masse innerhalb des Bereiches von ungefähr 1% bis ungefähr 5% ist.

11. Anordnung zum Dämpfen von Schwingungen gemäß einem der vorherigen Ansprüche, **dadurch gekennzeichnet, dass** die Walze eine Spaltwalze ist.

## Revendications

1. Agencement pour amortir des vibrations dans une masse vibrante dans un environnement de machine à papier / carton, dans lequel l'agencement d'amortissement comprend un amortisseur d'impact (11) incorporé dans la masse vibrante (m1), l'amortisseur d'impact (11) étant positionné à l'intérieur d'un rouleau d'une machine à papier / carton pour amortir les vibrations sur le rouleau.

2. Agencement pour amortir des vibrations selon la revendication 1, **caractérisé en ce que** l'agencement comprend un amortisseur de masse dynamique (10), où une masse auxiliaire (m2) est incorporée dans la masse vibrante (m1) par un moyen de ressort (k2), et **en ce que** l'amortisseur d'impact (11) est agencé conjointement avec ledit amortisseur de masse dynamique.

3. Agencement pour amortir des vibrations selon la revendication 1, **caractérisé en ce que** l'amortisseur d'impact (11) est réalisé comme faisant partie intégrante d'un amortisseur de masse dynamique (10).

4. Agencement pour amortir des vibrations selon la revendication 2, **caractérisé en ce que** l'amortisseur d'impact (11) est raccordé à l'amortisseur de masse dynamique (10) en tant que partie séparée.

5. Agencement pour amortir des vibrations selon l'une quelconque des revendications 1 à 4, **caractérisé en ce que** l'amortisseur d'impact (11) est composé d'une partie de carter (12) dans laquelle on place une masse d'impact rigide sans serrage (nrb), la masse d'impact se composant d'une ou de plusieurs particules de masse solides, laissant ainsi du jeu entre la masse d'impact (m3) et la partie de carter (12), ce qui permet à la masse d'impact (1TI3) d'entrer en collision avec les parois de la partie de carter.

6. Agencement pour amortir des vibrations selon l'une quelconque des revendications 1 à 5, **caractérisé en ce que** l'amortisseur d'impact (11) est prévu avec un moyen d'ajustement pour ajuster son efficacité d'amortissement.

7. Agencement pour amortir des vibrations selon les revendications 5 et 6, **caractérisé en ce que** les moyens d'ajustement d'efficacité d'amortissement comprennent des moyens pour ajuster le jeu entre la masse d'impact et la partie de carter (12).

8. Agencement pour amortir des vibrations selon les revendications 5 et 6, **caractérisé en ce que** la masse d'impact (m3) est un matériau magnétique, et **en ce que** les moyens d'ajustement d'efficacité d'amortissement comprennent des électroaimants ou des aimants permanents pour influencer la fréquence des collisions entre la masse impact et les parois de la partie de carter (12).

9. Agencement pour amortir des vibrations selon l'une quelconque des revendications ci-dessus, **caractérisé en ce que** l'amortisseur d'impact comprend des moyens pour bloquer la masse d'impact en place par rapport à la partie de carter, si nécessaire.

10. Agencement pour amortir des vibrations selon l'une quelconque des revendications ci-dessus, **caractérisé en ce que** le rapport de masse entre l'amortisseur et la masse vibrante à amortir est dans la plage d'environ 1 % à environ 5 %.

11. Agencement pour amortir des vibrations selon l'une quelconque des revendications ci-dessus, **caractérisé en ce que** le rouleau est un rouleau pinceur.
